(19) Europäisches Patentamt
European Patent Office
Office européen des brevets

(11) Publication number: **0 632 077 A2**

(12) **EUROPEAN PATENT APPLICATION**

(21) Application number: **94110220.4**

(22) Date of filing: **30.06.94**

(51) Int. Cl.[6]: **C08G 18/63**, C08G 18/80, C08G 18/62, C08G 18/10, C09J 175/04

(30) Priority: **01.07.93 US 86520**

(43) Date of publication of application: **04.01.95 Bulletin 95/01**

(84) Designated Contracting States: **DE FR GB**

(71) Applicant: **MINNESOTA MINING AND MANUFACTURING COMPANY**
**3M Center,**
**P.O. Box 33427**
**St. Paul,**
**Minnesota 55133-3427 (US)**

(72) Inventor: **Wakabayashi, Toshinori, c/o Sumitomo 3M Limited**
**8-8 Minami Hashimoto 3-chome**
**Sagamihara-shi,**
**Kanagawa-ken 229 (JP)**
Inventor: **Babu, Gaddam N., c/o Minnesota Mining and Manufact. Co.,**
**2501 Hudson Road,**
**P.O. Box 33427**
**Saint Paul,**
**Minnesota 55133-3427 (US)**
Inventor: **Stobbie IV, Charles W., c/o Minnesota Mining and Manufact. Co.,**
**2501 Hudson Road,**
**P.O. Box 33427**
**Saint Paul,**
**Minnesota 55133-3427 (US)**
Inventor: **Tangen, John C., c/o Minnesota Mining and Manufact. Co.,**
**2501 Hudson Road,**
**P.O. Box 33427**
**Saint Paul,**
**Minnesota 55133-3427 (US)**

(74) Representative: **VOSSIUS & PARTNER**
**Postfach 86 07 67**
**D-81634 München (DE)**

(54) **Moisture-curable polyurethane adhesive.**

(57) Hot-melt adhesive compositions which are moisture-curable to a crosslinked urethane-urea polymer and which have high shear strength at elevated temperature, improved adhesion to substrates having low surface energies, improved heat resistance, and extended pot times. The compositions comprise a mixture of a polyisocyanate-reacted maleated polyolefin, optionally a polyisocyanate-reacted hydroxyl-containing material, and optionally a tackifying resin.

EP 0 632 077 A2

This invention relates to a moisture-curable polyurethane composition. In another aspect, this invention relates to a moisture-curable hot-melt adhesive having improved heat resistance as well as good adhesion to substrates having low surface energies.

Moisture-curable polyurethane compositions are well known. They are generally used as adhesives, coatings, sealers, and casting materials. Moisture curable adhesives that adhere to unprimed substrates are described in U.S. Patent Nos. 4,539,345 and 4,661,542. These compositions comprise an isocyanate-functional prepolymer, a tackifier and, optionally, a plasticizer. U.S. Patent No. 4,891,269 describes hot melt, pressure-sensitive, moisture-curable polyurethane compositions that have high green strength, extended pot life, high ultimate strength, and high elongation at break. These compositions comprise (a) a liquid urethane prepolymer made by reacting a polyisocyanate with a polyhydroxy compound having a molecular weight of less than about 20,000; (b) a tackifying resin; and (c) a polyethylene-vinyl monomer component.

Moisture-curable hot-melt type adhesives comprising urethane prepolymers made from hydrocarbon-based polyols with hydroxyl end groups and diisocyanates are described in Kokai Nos. 2-272013 and 3-36015. In EP-A-420246, hot-melt adhesive compositions having improved heat resistance, reduced odor, and improved storage stability are disclosed. These adhesives comprise a urethane prepolymer, obtained by reacting a diisocyanate with a polyolefin diol having a hydroxyl group at each end, and a tackifier.

Briefly, the present invention provides a moisture-curable hot-melt adhesive composition comprising a polyisocyanate-reacted maleated polyolefin.

In another aspect, the present invention provides an article of manufacture comprising at least one substrate, preferably independently a transportation vehicle or a glazing material, and a layer of the above moisture-curable hot-melt adhesive composition, with the proviso that, where two or more substrates are present, said layer is between at least two of said substrates.

In a further aspect, the present invention provides a method for preparing a moisture-curable hot-melt adhesive composition comprising the step:

polymerizing a maleated polyolefin with at least one polyisocyanate, optionally in the presence of at least one of a catalyst and a tackifier.

The present invention provides a hot-melt adhesive composition which can be moisture cured to a crosslinked urethane-urea polymer and which has high strength at elevated temperatures and improved adhesion to low surface energy substrates.

In the present application,

"hydroxyl-containing material" means a mono- or polyol;

"polyisocyanate-reacted" means a material with isocyanate-reactive hydrogen atoms, preferably hydroxyl groups, which has been reacted with a material containing at least two isocyanate moieties; and "group" or "ring system" means a chemical species that allows for substitution by conventional substituents which do not interfere with the desired product.

The moisture-curable hot-melt adhesive composition of the present invention comprises the reaction product of a maleated polyolefin and at least one polyisocyanate to form a polyisocyanate-reacted maleated polyolefin. A hydroxyl-containing material, a tackifying resin, and a catalyst can also be added.

A preferred embodiment of the adhesive composition of the present invention comprises

a) the reaction product of

(1) 100 parts by weight (pbw) of a maleated polyolefin having a weight average molecular weight ($M_w$) of about 25,000 to about 250,000 and an acid number from about 15 to 50 mg KOH/g polymer;

(2) up to 50 pbw, preferably 1 to 20 pbw, of a hydroxyl-containing material having a number average molecular weight ($M_n$) of about 150 to 10,000;

(3) one or more polyisocyanates, or a mixture of mono- and polyisocyanates, in such an amount so as to provide to the mixture 0.5 to 4 equivalent weights of isocyanate per equivalent weight of total acid equivalents in (1) and, optionally, hydroxyl equivalents in (2); and

(4) optionally, a catalyst for promoting the reaction of (3) with (1) and (2), if present; and

b) a tackifying resin in an amount up to 100 pbw, preferably 10 to 60 pbw, and more preferably 20 to 50 pbw, per 100 pbw of maleated polyolefin.

Preferably, the maleated polyolefin of the moisture-curable composition of the invention has the general formula

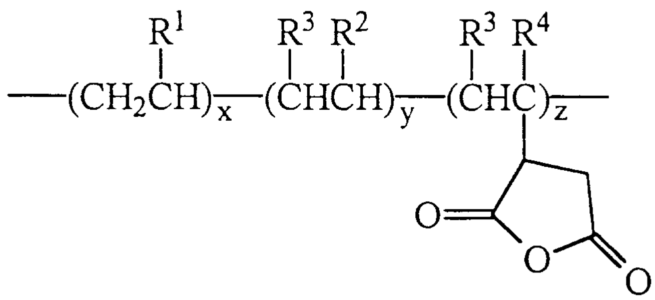

I

wherein

$R^1$ is an alkyl group preferably having 4 to 12 carbon atoms, more preferably 4 to 8 carbon atoms, and most preferably 4 to 6 carbon atoms;

$R^2$ is hydrogen; an alkyl group having 1 to 18 carbon atoms, preferably 1 to 3 carbon atoms; or an aryl group having 6 to 12 carbon atoms;

$R^3$ is preferably hydrogen or, together with $R^2$ and the carbon atoms to which they are attached, forms a saturated or unsaturated monocyclic or polycyclic ring system having 6 to 20 carbon atoms;

$R^4$ is $R^1$ or $R^2$;

x, y, and z are numbers which define the relative molar amounts of the randomly spaced, two-carbon units making up the backbone chain of the polymer, with the following provisos:

1. x is at least 60 mole percent of the sum of x + y + z;
2. y is zero where $R^1$ and $R^2$ are the same and $R^3$ is hydrogen;
3. z is from about 3 to 15 mole percent of the sum of x + y + z; and
4. the $M_w$ of the polymer will be in the general range of 15,000 to 250,000, preferably from 25,000 to 100,000.

The maleated polyolefins of the present invention can be prepared by reacting

a) a saturated homopolymer or copolymer made by polymerizing one or more $C_6$ to $C_{14}$ $\alpha$-olefin monomers, alone or with up to 40 mole percent of one or more $C_2$ to $C_{20}$, preferably $C_2$ to $C_5$, $\alpha$-olefin monomers or aromatic olefins in the presence of a Ziegler-Natta catalyst, with

b) maleic anhydride,

in the presence of a free radical initiator, preferably a peroxide catalyst together with an electron donor such as triphenyl phosphite or triethyl phosphate.

Preferred Ziegler-Natta catalysts include combinations of a complex of alkylaluminum and a halide of a transition metal from group 4 to group 10 of the Periodic Table (Chem. Abstracts Version). Typical alkylaluminum complexes include triethylaluminum, tributylaluminum, diethylaluminum chloride, and dibutylaluminum chloride. Transition metal halides include such compounds as titanium trichloride, titanium tetrachloride, vanadium trichloride, vanadium tetrachloride, and vanadium oxytrichloride. A particularly preferred catalyst system, commercially available from Stauffer Chemical Co. (Hartford, CT), is diethylaluminum chloride/aluminum-activated titanium trichloride.

Maleated polyolefins suitable for use in the preparation of the moisture-curable composition of the invention are available from Eastman Chemical Company (Longview, TX). Most are available (as part of Eastman's P 1284™ series) in both high and low acid numbers representing selected amorphous homopolymers; propylene-ethylene, propylene-butene, and propylene-hexane copolymers; and propylene, ethylene, and butene terpolymers.

Alpha-olefins that can be used in preparation of the maleated polyolefins of the invention can have from 2 to 20 carbon atoms. Representative examples include, but are not limited to, ethylene, propylene, 1-butene, 1-pentene, 1-hexene, 1-heptene, 1-octene, 1-tetradecene, 1-octadecene, 1-eicosene, 2-butene, 2-pentene; branched olefins such as 3-methyl-1-butene, 3,3-dimethyl-1-butene, 4-methyl-1-pentene, 3-ethyl-1-pentene; cyclic olefins such as cyclopentene, cyclohexene, 3-methylcyclopentene, 4-*n*-butylcyclohexene, bicyclo[2.2.1]hept-2-ene, 1,7,7-trimethylbicyclo[2.2.1]hept-2-ene (bornylene), bicyclo[3.2.0]hept-2-ene, bicyclo[3.2.0]hept-6-ene, bicyclo[2.2.0]oct-2-ene, tricyclo[3.2.2]non-6-ene; and aromatic olefins such as allylbenzene, 1H-indene, 3-methyl-1H-indene, and styrene.

Polyisocyanates and isocyanates which can be used in the preparation of the moisture-curing composition of the invention can be aliphatic or aromatic. A list of useful polyisocyanates, which are commercially available from a variety of sources (see Kirk-Othmer, *Encyclopedia of Chemical Technology* (3d ed.), vol. 13, p. 802, John Wiley & Sons, Inc., New York (1981)), include 2,4- and 2,6-toluene diisocyanate (TDI),

substituted toluene diisocyanates, diphenylmethane-2,4'- and 4,4'-diisocyanate (MDI), partially carbodiimidized MDI, polymethylene polyphenyl isocyanate, 4,4'-dicyclohexylmethane diisocyante, tolidine diisocyanate, phenyl isocyanate, chlorophenyl isocyanate, 3,4-dichlorophenyl isocyanate, methyl isocyanate, ethyl isocyanate, *n*-butyl isocyanate, cyclohexyl isocyanate, octadecyl isocyanate, hexamethylene diisocyanate, biuret of hexamethylene diisocyante, and 3-isocyanatomethyl-3,5,5-trimethyl-cyclohexyl isocyanate (IDPI). Especially preferred are aromatic diisocyanates such as MDI and TDI, and mixtures thereof. Other examples include naphthylene-1,5-diisocyanate, triphenylmethane-4,4',4''-triisocyanate, phenylene-1,3-diisocyanate, phenylene-1,4-diisocyanate, dimethyl-3,3'-biphenylene-4,4'-diisocyanate, diphenylisopropylidine-4,4'-diisocyanate, biphenylene diisocyanate, xylylene-1,3-diisocyanate, and xylylene-1,4-diisocyanate.

Oligomeric isocyanates derived from aromatic diisocyanates may also be used. Examples include liquid mixtures of an isocyanate-functional derivative with melting point modifiers (e.g., mixtures of MDI with carbodiimide adducts such as Isonate™ 143L (Dow Chemical Co.; Midland, MI) and Mondur™ CD (Miles Chemical Corp.; Pittsburgh, PA); up to 10% (by weight) of the total isocyanate component of polymeric MDI (e.g., PAPI™ and the PAPI™ 20 through PAPI™ 901 series (Dow Chemical Co.); Mondur™ MR, Mondur™ MRS, and Mondur™ MRS-10 (Miles Chemical Corp.); and Rubinate™ M (ICI Chemicals, Inc.; Wilmington, DE)); and blocked isocyanate compounds formed by reacting aromatic isocyanates or the above-described isocyanate-functional derivatives with blocking agents such as ketoxime. Such blocked isocyanate-functional derivatives will, for convenience, be regarded herein as isocyanate-functional derivatives.

Sufficient isocyanate should be present in the moisture-curable composition to provide to the composition 0.5 to 4 equivalents, preferably 1.5 to 2.5 equivalents, of isocyanate to total acid equivalents of anhydride and hydroxyl.

Hydroxyl-containing materials that can be (optionally) used in the moisture-curing composition of the invention have molecular weights of about 150 to about 10,000, preferably from about 200 to 2000. Useful materials include hydroxyl-substituted polyolefins, polyesters, polyethers, polyamides, polyimides, and the like. Preferred mono- or polyols are liquid to waxy materials at room temperature and have from 0.5 to 4 hydroxyl equivalents. Particularly preferred are the aliphatic mono- and polyols. Of these, polyolefinic, polyester, and polyether mono- and polyols are the most preferred.

Hydroxyl-substituted polyolefins can be prepared in many ways. One well known method is to effect polymerization of one or more of $\alpha$-olefins and dienes using anion or Ziegler-Natta catalysis. Hydrogenation of the polymerization product reduces unsaturation to preferably less than about 5% to yield a suitable hydroxyl-containing polyolefin. An example of a commercially available hydroxyl-containing polyolefin is an alcohol such as NOVA Guerbet Alcohol 20i™ (NOVA Molecular Technologies, Inc.; Janesville, WI); polybutadienes such as Polytail™-H and HA (Mitsubishi Kasei America, Inc.; White Plains, NY); Epol™ hydrogenated polyisoprenes (Idemitsu Petrochemical Co., Ltd.; Southfield, MI); low-viscosity poly(ethylene/butylene) polymers having terminal primary hydroxyl groups such as HPVM™-2500 (available on an experimental basis from Shell Chemical Co.; Houston, TX); polyalkylene oxides such as Voranol™ (Dow Chemical Co.; Midland, MI); and saturated, linear, long-chain alcohols such as Unilin™ 350, 425, 550, and 700 (Petrolite Corp.; Tulsa, OK).

Preferable mono- and polyols have the general formula

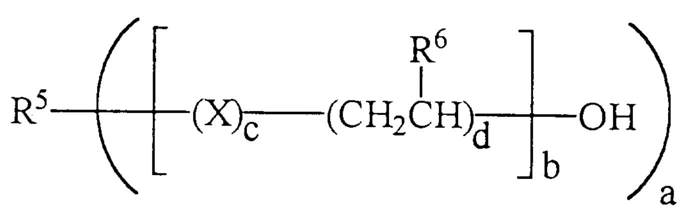

wherein

- $R^5$ is hydrogen or an aliphatic group having 1 to 12 carbon atoms and a valence of a;
- $R^6$ is hydrogen or an alkyl group with 1 to 4 (inclusive) carbon atoms;
- X is an element or a divalent radical, preferably oxygen;
- a is an integer from 1 to 4 inclusively;
- b is a number that designates the average number of units in the hydroxyl-containing material such that the material has a $M_n$ of 150 to 10,000, preferably from 200 to 2000;
- c is 0 or 1; and

d is 1 or 2.

Polyether mono- and polyols are well known and are prepared by well known reactions of compounds containing hydroxyl groups with ethylene oxide and/or propylene oxide in the presence of a base catalyst. A myriad of hydroxyl-group containing compounds can be used to initiate the reaction including, for example, methanol, ethanol, propanol, butanol, ethylene glycol, butylene glycol, glycerine, 2,2-dimethylolpropane, and pentaerythritol. Examples of commercially available hydroxyl-functional polyethers include Arcol™ polyether polyols such as PPG™ 425, PPG™ 725, LHT™ 112, LHT™ 28, and LG™ 168 (Arco Chemical Co.; Newtown Square, PA); polyethylene glycols such as the Carbowax™ series having a molecular weight from 350 to 5000 (Union Carbide Corp.; Danbury, CT); Pluracol™ E 1450 polyethylene glycol (BASF Corp.; Parsippany, NJ); and TERATHANE™ poly(tetramethylene oxide) polyol (E.I. DuPont de Nemours; Wilmington, DE).

The polyester mono- and polyols are also well known and are prepared by condensation reactions of a polyol and a dicarboxylic acid in the presence of a catalyst. Preferred polyester alcohols have the general formula

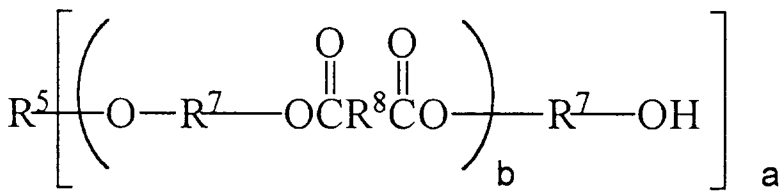

wherein

$R^5$, a, and b are defined as above, and

$R^7$ and $R^8$ are independently selected from the group consisting of

(1) linear and branched aliphatic groups having 2 to 12 carbon atoms, and

(2) 5- and 6-membered aliphatic and aromatic carbocyclic groups having 5 to 20 carbon atoms.

Examples of commercially available hydroxyl-containing polyester polyols include Dynacoll™ 7110 and 7230 (Hüls AG; Piscataway, NJ); Lexorez™ 1100-220, 1100-110, 1100-25, 1101-60A, 1101-50A, 1102-60A, 1110-110, etc. (Inolex Chemical Co.; Philadelphia, PA); and the Formrez™ polyester series (Witco Corp.; Melrose Park, IL).

In addition, the compositions can contain an effective amount of at least one of catalysts and reaction accelerators such as tertiary amines and organometallic compounds, and co-curatives such as oxazolidine, as is well known in the art. Dibutyltin dilaurate (DBTDL) is a preferred organometallic catalyst, although others such as dibutyltin diacetate, dibutyltin disulfide, tin octanoate, and tetrabutyl titanate can also be used. Organometallic catalyst preferably can be present from about 0.01 to 2% (by weight), more preferably about 0.05 to about 1% (by weight), of the prepolymer.

The moisture-curable compositions of the present invention comprise up to 100 parts, preferably 10 to 60 parts, and more preferably 20 to 50 parts, by weight of tackifying resin per 100 parts by weight of maleated polyolefin. Tackifying resin can be used to lower the viscosity of the reaction mixture. Adhesive mixtures with lower viscosities can be more readily hot-melt coated; thus, the resultant coating will have better tackiness and peel adhesion than a coating of the untackified polymer alone. Tackifying resins also enhance internal strength and thermal stability.

Useful tackifying resins include those derived from polymerization of unsaturated $C_5$ to $C_9$ hydrocarbon monomers, polyterpenes, rosin esters, synthetic polyterpenes, and the like. Hydrocarbon tackifying resins can be prepared by polymerization of monomers consisting primarily of olefins and diolefins and include, for example, residual byproduct monomers of the isoprene manufacturing process. These hydrocarbon tackifying resins typically exhibit ball and ring softening points (see ASTM E28-67 "Softening Point by Ring and Ball Apparatus") from about 80° to about 145°C, acid numbers from about 0 to 2, and saponification values of less than one. Examples of commercially available tackifying resins based on a $C_5$-olefin fraction of this type are Wingtack™ 95 and Wingtack™ 115 (Goodyear Tire and Rubber Co.; Akron, OH). Other hydrocarbon resins include Regalrez™ 1078 and 1126 (Hercules Chemical Co., Inc.; Wilmington, DE), Escorez™ resins (Exxon Chemical Co.; Newark, NJ), and the Arkon™ series of resins (Arakawa Chemical Co.; Chicago, IL). Particularly preferred tackifiers are the Arkon™ P and E series of highly hydrogenated hydrocarbon tackifying resins, such as Arkon™ E-90 (Arakawa Chemical Co.). The tackifying resin may

contain ethylenic unsaturation. However, saturated tackifying resins are preferred for those applications where oxidation resistance is important.

If desired, the compositions of the invention can contain other components. For example, chain extension agents (e.g., short chain polyols such as ethylene glycol or butanediol); fillers such as carbon black, metal oxides (e.g., zinc oxide), talc, clay, silica, silicates, glass or polymeric microbubbles, and conductive particles; thermoplastic resins; plasticizers; antioxidants; pigments; UV absorbers; and adhesion promoters (e.g., silanes) may be included to impart to the composition characteristics which are desirable for a particular purpose. Such components should be added in amounts which do not interfere with the composition's adhesion to surfaces having low surface energies and with its shear strength at elevated temperatures. These components, either individually or in combination, can comprise up to 50% (by weight) of the composition.

The moisture-curable composition of the invention can be prepared by mixing the components in a conventional mixing apparatus. Elevated temperatures can be used where necessary. Preferably, the components other than isocyanate and catalyst will be separately dried by heating (50° to 250°C) under vacuum for a period of time (e.g., 2 to 24 hours) before being mixed and will be maintained at 50° to 150°C under an inert gas (e.g., nitrogen) during mixing until the reaction is complete. (Completeness of the reaction can be monitored by tracking the disappearance of the anhydride group by IR spectroscopy).

Preferably, where the hydroxyl-containing material of the reaction mixture is a monool, approximately equimolar amounts of the monool and the isocyanate component are mixed (and heated at a temperature of 50° to 150°C, if necessary), optionally in the presence of a catalyst, examples of which are given above, to form an isocyanate-terminated urethane. This material is then reacted with maleated polyolefin (I), adding catalyst if desired. If necessary, the reaction can be driven to completion by heating (50° to 150°C) for a period of time (generally from about 5 minutes to 5 hours). The following series of reactions, in addition to other reactions, may take place:

Scheme 1

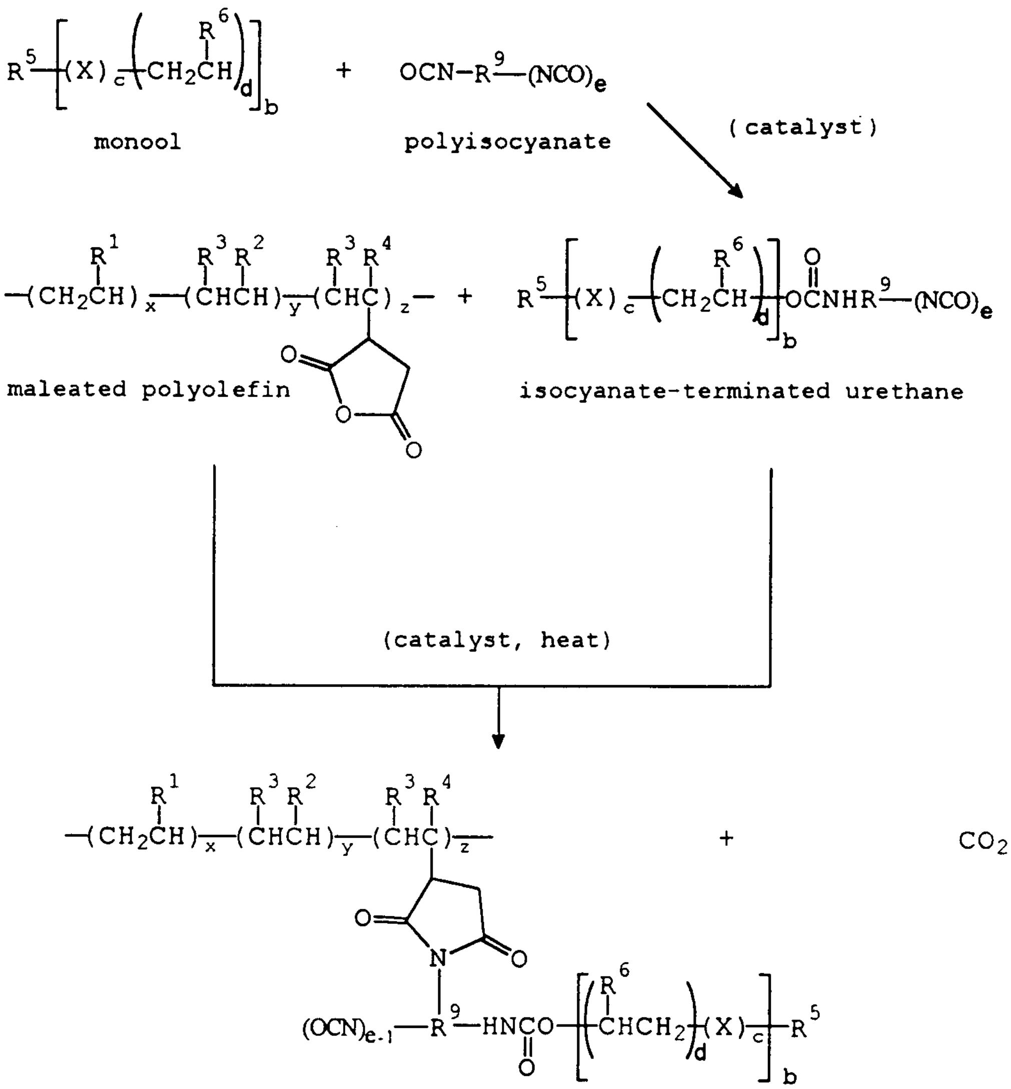


in which

| | |
|---|---|
| $R^1$, $R^2$, $R^3$, $R^4$, $R^5$, $R^6$, X, b, c, d, x, y, and z | are defined as above; |
| $R^9$ | is an organic group having a valence of e+1 and is selected from the group consisting of (1) linear and branched aliphatic groups having 2 to 12 carbon atoms, and (2) 5- and 6-membered aliphatic and aromatic carbocyclic groups having 5 to 20 carbon atoms; and |
| e | is 1 to 3. |

Thereafter, up to 100, preferably 10 to 60, and more preferably 20 to 50, parts by weight of a tackifying resin and up to 3 equivalents of additional polyisocyanate is added to the reaction mixture (based on the total molar equivalent weights of the maleated polyolefin and the monool).

Where the hydroxyl-containing material of the reaction mixture is a polyol, addition of the polyol to the polyisocyanate will preferably be accomplished in separate operations, each being performed so that 0.5 to 4 equivalents of isocyanate per hydroxyl equivalent in the polyol and per acid equivalent in the maleated polyolefin are present.

Scheme II shows a series of reactions that may take place.

Scheme II

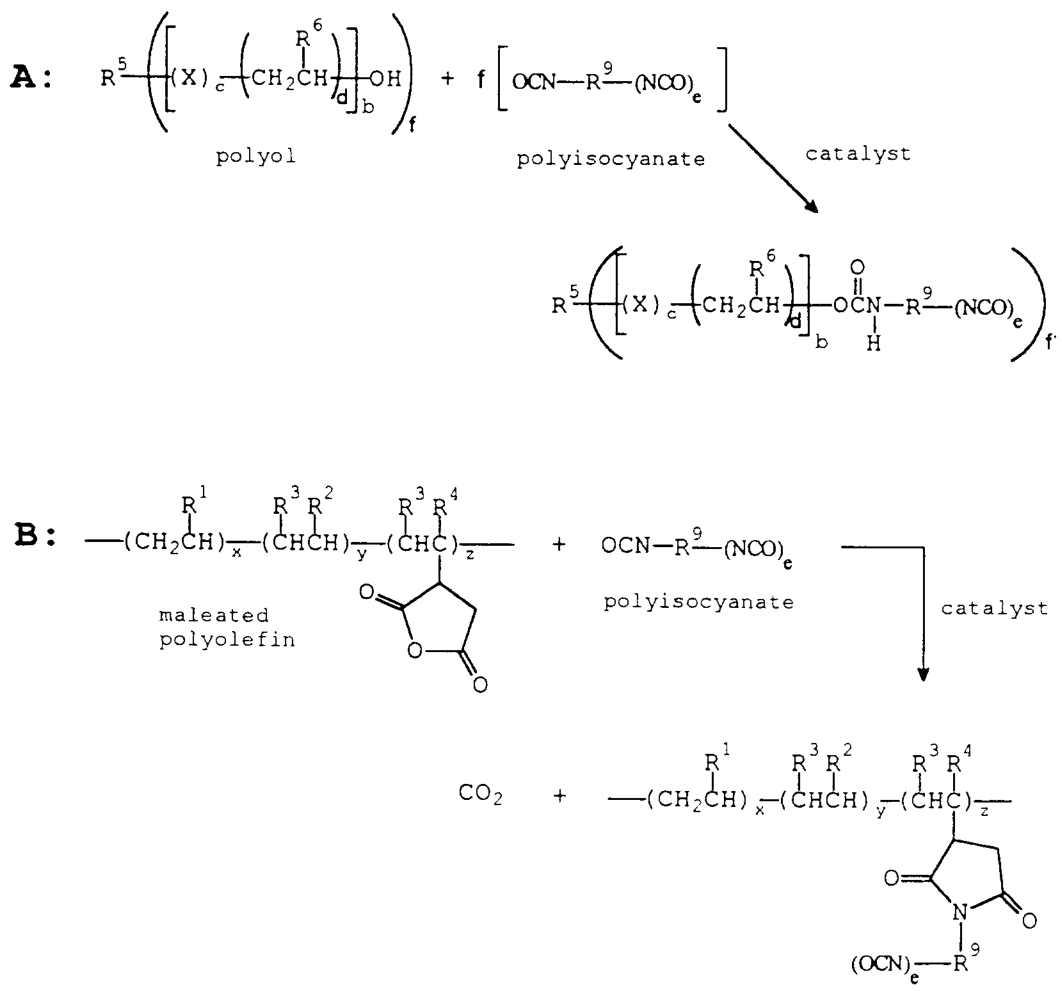


The product of Reaction A can also randomly react with the first reagent of Reaction B to provide isocyanate-terminated polymers which, upon exposure to moisture, form urea crosslinks.

in which

$R^1$, $R^2$, $R^3$, $R^4$, $R^5$, $R^6$, $R^9$, X, b, c, d, e, x, y, and z are defined as above; and

f is an integer from 2 to 4 inclusively.

The products of reaction schemes A and B are then combined and mixed with up to 100, preferably 10 to 60, and more preferably 20 to 50, parts by weight of a tackifying resin. Generally, the preparation is made without the use of solvents. The molten product is packaged in containers that are sealed so as to exclude moisture.

The compositions of the invention can be packaged according to techniques known to those skilled in the art. Suitable packages include, for example, caulking tubes (made, for example, of metal or plastic), screw-capped squeezable tubes, cans, drums, and the like.

Compositions of the present invention are cured by exposure to moisture (e.g., water vapor). Curing occurs when water molecules react with remaining isocyanate units (i.e., those not involved in the reaction with maleated polyolefin). Ambient humidity usually is adequate to promote curing. Heat and/or high humidity produce faster cure rates whereas low temperatures (e.g., 5 °C or less) and low humidity (e.g., a relative humidity of 15% or less) produce slower cure rates.

Compositions of the invention can be employed in applications where a high-performance adhesive, coating, sealant, or casting resin is desired. One such use includes the bonding of original or replacement glazing materials (e.g., windshields and back-lights of laminated safety glass) to transportation vehicles such as automobiles, trucks, aircraft, trains, and the like. When so used, the compositions of the invention provide rapid drive-away times following glazing material installation. These compositions can also be used in building construction (e.g., as a panel adhesive, moisture barrier, or glazing sealant), assembly line manufacturing (e.g., assembly of parts such as windows by adhesive bonding), lamination of products such as skis, coatings for outdoor surfaces (e.g., concrete deck coatings or roof membranes), and sealants (e.g., marine sealants or sealants for use in cable splice housings). The compositions of the invention can be applied to substrates such as glass, metal (whether bare or painted), ceramics, thermoplastics, thermosetting materials, foam materials, canvas, wood, paper, leather, rubber, and textiles (both woven and nonwoven). The compositions are particularly useful on low surface energy materials such as polyolefins.

Where the moisture-curable composition is to be used as a coating, the use of a diluent is desirable. Illustrative of inert diluents which may be employed are vegetable oils; mineral oils such as napthenic and paraffinic distillates; and esters such as dibutyl phthalate, dioctyl phthalate, and dioctyl adipate. Approximately 0 to 300 pbw of diluent, based on 100 pbw of the moisture-curable composition, can be employed.

The following examples illustrate objects and advantages of this invention. The particular materials and amounts, as well as other conditions and details, recited herein should not be construed to unduly limit this invention.

## EXAMPLES

### Heat Resistance

Heat resistance of the moisture-curable composition of the invention was determined by subjecting overlap shear bonds to incremental temperature increases and determining the temperature at which bond failure occurred.

Overlap shear bonds were prepared from 2.5 cm x 10 cm x 8 mm Douglas fir coupons (W.B. Martin Lumber; St. Paul, MN) with at least one smooth face, using spacers with diameters of 0.33 mm. The composition was extruded at 120 °C onto one end of one of the smooth faces of a coupon and immediately spacers were put in place, a thermocouple was embedded in the composition, and a second coupon placed thereon to overlap 2.5 cm of the first coupon. The assembly was pressed at 0.7 MPa for 15 to 20 seconds, which forced the composition to cover the 2.5 cm x 2.5 cm area of the overlap and to ooze out from the edges of the bonded area. The bonded constructions were conditioned at 25 °C and 50% relative humidity for 10 days. A 0.9 kg (2 pounds) weight was hung from one end of the bonded construction and the bonded construction suspended from the other end in an oven at 48.9 °C (120 °F). Once the embedded thermocouple showed a temperature of 48.9 °C, the samples were allowed to stand at that temperature for 15 minutes. Cycles of raising the temperature of the oven in 5.55 °C (10 °F) increments and holding that temperature for 15 minutes were repeated until bond failure occurred. A composition's heat resistance is defined as the last temperature at which bond failure did not occur within the 15-minute holding time.

### Peel Adhesion

Peel adhesion was determined using a modified version of ASTM D-903 in which the flexible substrate was canvas and the rigid substrate was either abraded aluminum, cold rolled steel, polypropylene, polyethylene, polycarbonate, polystyrene or poly(methyl methacrylate). The adhesive was extruded at 120 °C onto the center portions of: (1) 2.5 cm x 10 cm x 0.15 cm pieces of 2024-grade aluminum (Vincent Metals; Minneapolis, MN) which had been wiped with methyl ethyl ketone (MEK), (2) 2.5 cm x 10 cm x 0.079 cm (20 gauge) pieces of cold rolled steel (Vincent Metals; Minneapolis, MN) which had been wiped with MEK, (3) 2.5 cm x 10 cm x 0.3 cm pieces of rigid polystyrene (Huntsman grade 730) (Precision Punch & Plastics Co.; Minnetonka, MN) which had been wiped with isopropanol, and (4) 2.5 cm x 10 cm x 0.3 cm pieces of rigid polypropylene (National Tool & Manufacturing Co.; Kenilworth, NJ) which had been wiped with MEK. Immediately, 3.8 cm x 28.5 cm pieces of No. 10 cotton duck canvas (West Point-Pepperell Inc.; West Point, GA) were bonded to the aluminum, cold rolled steel, polystyrene, and polypropylene using a press (set at 0.7 MPa) for about 15 to 20 seconds. This pressure was sufficient to force the adhesive to cover the entire bond area and to squeeze excess adhesive from the edges of the bond area. The samples were conditioned at 25 °C and 50% relative humidity for 10 days. The canvas was then trimmed to a 2.5 cm width and the resulting coupons were tested using an Instron™ TM tensile tester (Instron Corp.; Canton,

MA) at a crosshead speed of 5 cm/min. Peel adhesion was measured as the average of the high and low readings of the three coupons and is reported in pounds per inch width (piw) and Newtons per centimeter width (N/cm).

In the Tables that follow are shown the components used in the preparation of moisture-curable hot-melt adhesives. (Unless otherwise indicated, "parts" means pbw). These components are identified as follows:

MAPO (Maleated polyolefin)

P 1824-011 (Eastman Chemical Co.) is a maleated amorphous poly(propylene-hexene) (APH) having an acid number of 42. It was dried by heating in a vacuum oven at 121°C (250°F) for 16 hours.

P 1824-012 (Eastman Chemical Co.) is an APH having an acid number of 40. It was dried by heating in a vacuum oven at 121°C (250°F) for 16 hours.

P 1824-013 (Eastman Chemical Co.) is an APH having an acid number of 20. This was dried by heating in a vacuum oven at 121°C (250°F) for 16 hours.

Monools

NOVA Guerbet Alcohol 20i™ hydroxyl-functional polyolefin (NOVA Molecular Technologies, Inc.), molecular weight 298, has a hydroxyl group attached near the center of a fully saturated backbone. It was dried by heating in a vacuum oven at 121°C (250°F) for 2 hours.

Unilin™ 700 (Petrolite Corp.) is a linear hydrocarbon alcohol having 50 carbon atoms. It was dried by heating in a vacuum oven at 121°C (250°F) for 2 hours.

Polyols

Polytail™-H and Polytail™-HA (Mitsubishi Kasei Corp.) are hydrogenated polybutadiene diols having hydroxyl numbers of 37-53 and 41-55, respectively. They were dried by heating in a vacuum oven at 121°C (250°F) for 2 hours.

Epol™ polyisoprene (Idemitsu Petrochemical Co. Ltd.) is a hydrogenated polyisoprene diol. It was dried by heating in a vacuum oven at 121°C (250°F) for 2 hours.

HPVM™-2500 (Shell Chemical Co.; Houston, TX) is a hydrogenated polybutadiene diol having terminal hydroxyl groups. It was dried in a vacuum oven at 121°C (250°F) for 2 hours.

Polyisocyanates

MDI is diphenylmethane-4,4'-diisocyanate available as Mondur™ M (Miles Chemical Corp.).

Silan™ A-1310 (Union Carbide Corp.; Danbury, CT) is 3-isocyanatopropyltriethoxysilane.

Tackifier

Arkon™ E-90 (Arakawa Chemical Co.; Chicago, IL) is a deeply hydrogenated hydrocarbon tackifying resin.

Catalysts

DBTDL is dibutyltin dilaurate.

DMDEE is dimorpholine diethyl ether.

Examples 1-7: Monools

Relative amounts of components used in the preparation of moisture-curable hot-melt compositions in which the hydroxyl group-containing component is a monool are given in Table I. The table also sets forth viscosities (in centipoise) of the resulting uncured compositions at 121°C (250°F), their dead load heat resistances, and the 180° peel obtained for each moisture cured composition. These compositions were prepared according to the following procedure:

A stainless steel reactor was preheated to about 107°C (225°F) and purged with nitrogen. Polyisocyanate was added so as to provide two equivalents of isocyanate per hydroxyl equivalent. Monool

was added to the reactor, and the mixture was stirred for 10 to 20 minutes. A mixture of MAPO and tackifier was added to the reactor. After approximately 10 more minutes of mixing at 107 ° C (225 ° F), catalyst and the balance of polyisocyanate were added. The nitrogen purge was discontinued and a vacuum of 20-30 in Hg was applied. Mixing was continued for an additional 30 minutes. The product was discharged into aluminum cartridges and sealed against moisture.

TABLE I

| Example No. | Components (pbw) | | | | | | | | Characteristics | | |
|---|---|---|---|---|---|---|---|---|---|---|---|
| | MAPO | | | Monool | | Polyisocyanate | Tackifier | Catalyst | | | |
| | P1824-011 | P1824-012 | P1824-013 | NOVA 20i | Unilin 700 | MDI | Arkon E-90 | DBTDL | Viscosity at 121° C (cps) | DLHR[c] (°C) | 180° Peel[d] (N/cm) |
| 1 | | | 100 | 5 | | 8.9 | 30 | 0.2 | 19,250 | 73 | 36.7[e] |
| 2 | 50 | 50 | | 5 | | 18.5 | 50[a] | 0.2 | 15,000 | 83 | 52.5[e] |
| 3 | | 100 | | 5 | | 14.0 | 30 | 0.2 | 15,250 | 108 | 45.5[e] |
| 4 | 50 | 50 | | 5 | | 18.5 | 30 | 0.4 | 19,500 | >149 | 43.7[f] |
| 5 | | 100 | | 5 | | 17.8 | 30 | 0.4 | 33,000 | >149 | 54.2[f] |
| 6 | 50 | 50 | | | 10 | 18.5 | 30 | 0.4 | 18,000 | >149 | 61.2[f] |
| 7 | 50 | 50 | | 5 | | 18.5 | 50[b] | 0.4 | 27,500 | >149 | 66.5[e] |

[a] also contained 7.5 pbw Kraton™ DRP-6404
[b] also contained 1.0 pbw Carbowax™ 750
[c] dead load heat resistance
[d] peel adhesion of the composition bonding polypropylene to canvas
[e] cohesive failure
[f] shocky

Table I shows the amounts of reagents used in the preparation of and the performance characteristics of moisture-curable hot-melt compositions in which the hydroxyl group-containing component is a monool.

The data of Table II show the 180° peel strength of bonds between canvas and various materials made using the composition of Example 7.

TABLE II

| | 180° Peel Strength (N/cm) |
|---|---|
| Polypropylene | 61.2 |
| Polystyrene | 49.0 |
| Glass | 56.0 |
| Aluminum | 56.0 |
| Cold rolled steel | 64.7 |

Examples 8-15: Polyols

The relative amounts of components used in the preparation of moisture-curable hot-melt compositions in which the hydroxyl group-containing component is a polyol and the data obtained by testing these compositions are shown in Table III. These compositions were prepared according to the following procedure:

A stainless steel reactor was preheated to about 107°C (225°F) and purged with nitrogen before polyisocyanate was added. Polyol was added to the reactor, and the mixture was stirred for 10 to 20 minutes. A mixture of MAPO and tackifier was added to the reactor. Mixing was continued for about 10 minutes at 107°C (225°F) before catalyst was added. The nitrogen purge was discontinued, a vacuum of 20-30 in Hg was applied, and mixing was continued for 30 minutes. The product was discharged and stored in aluminum cartridges sealed against moisture.

TABLE III

| | COMPONENTS | | | | | | | | | | Characteristics | | |
|---|---|---|---|---|---|---|---|---|---|---|---|---|---|
| | MAPO | | | Polyol | | | | Polyiso-cyanate | Tackifier | Catalyst | | | |
| Ex. No. | P1824-011 | P1824-012 | P1824-103 | Polytail-H | Polytail-HA | EPOL | HPVM 2500 | MDI | Arkon E-90 | DBTDL | Viscosity at 121°C (cps) | DLHR (°C) | 180° Peel (N/cm) |
| 8 | | | 100 | | | 20 | | 11.2 | 30 | 0.2 | 35,000 | 74 | 28.0[a] |
| 9 | | | 100 | | | 20 | | 11.2 | 50 | 0.2 | 27,000 | 71 | 29.7[a] |
| 10 | | | 100 | | 20 | | | 11.3 | 30 | 0.2 | 18,000 | 74 | 15.7[b] |
| 11 | 50 | 50 | | 20 | | | | 22.8 | 30 | 0.4 | 18,000 | >149 | 10.5 |
| 12 | 50 | 50 | | | | | 20 | 21.0 | 30 | 0.4 | 8,000 | >149 | 12.2[b] |
| 13 | 50 | 50 | | | | 20 | | 23.0 | 50 | 0.4 | 17,500 | >149 | 12.2 |
| 14 | 50 | 50 | | | | 20 | | 23.0 | 30 | 0.4 | 18,000 | >149 | 21.0 |
| 15 | 50 | 50 | | | | | 20 | 18.5 | 50 | 0.4 | 6,000 | >149 | 38.5[a] |

[a] shocky

[b] adhesive failure

Table III shows the amounts of reagents used in the preparation of and the performance characteristics of moisture-curable hot-melt compositions in which the hydroxyl group-containing component is a polyol.

Examples 16-22: No hydroxyl-containing material

The relative amounts of components used in the preparation of moisture-curable hot-melt compositions prepared in the absence of a hydroxyl group-containing component and the data obtained by testing these

compositions are shown in Table IV. Compositions 17-21 were prepared according to the following procedure:

A stainless steel reactor was preheated to 107°C (225°F) and purged with nitrogen before polyisocyanate was added. When it had melted, MAPO and tackifier were added. After approximately 20 to 30 minutes of mixing at 107°C (225°F) under nitrogen purge, catalyst was added. The nitrogen purge was discontinued and a vacuum of 20-30 in Hg was applied. Mixing was continued for an additional 30 minutes. The product was discharged into aluminum cartridges and sealed against moisture.

Examples 16 and 21 are comparative examples containing no polyisocyanate. They were prepared by adding MAPO and tackifier to a stainless steel reactor and mixing, under vacuum, for 20 to 30 minutes at 107°C (225°F). The product was discharged into aluminum cartridges and sealed against moisture.

TABLE IV

| Example No. | COMPONENTS (pbw) | | | | | | | | Characteristics | | |
|---|---|---|---|---|---|---|---|---|---|---|---|
| | MAPO | | | Polyisocyanate | | Tackifier | Catalyst | | | | |
| | P1824-011 | P1824-012 | P1824-013 | MDI | SILAN A-1310 | Arkon E-90 | DBTDL | DMDEE | Viscosity at 121°C (cps) | DLHR (°C) | 180° Peel (N/cm) |
| 16 | | | 100 | | | 50 | | | | 50 | 31.5[b] |
| 17 | | | 100 | | 4.0 | 50 | | 0.2 | | 103 | 24.5[c] |
| 18 | 50 | 50 | | 18.5 | | 30 | 0.4 | | 11,500 | >127 | 15.7[c] |
| 19 | | | 100 | 4.9 | | 50 | 0.2 | | | >149 | 17.5[c] |
| 20 | 50 | 50 | | 18.5 | | 50 | 0.4 | | 7,250 | >149 | 29.7[c] |
| 21 | 50 | 50 | | | | 50 | | | 30,000 | 52 | 42[b] |
| 22[a] | | 100 | | 19.1 | | 30 | 0.4 | | 26,500 | | 26.2[b] |

[a] also contained 10 pbw Dynacoll™ 7380 polyester diol (Hüls AG)
[b] cohesive failure
[c] adhesive failure

TABLE IV shows the amounts of reagents used in the preparation of an the performance characteristics of moisture-curable hot-melt compositions in which no hydroxyl group-containing component was present.

The data from Tables I to IV show that the hot-melt adhesive compositions of the present invention have good coating and adhesive properties.

## Claims

**1.** A moisture-curable hot-melt adhesive composition comprising a polyisocyanate-reacted maleated polyolefin.

**2.** The hot-melt adhesive composition of claim 1 wherein said polyisocyanate-reacted maleated polyolefin has the formula

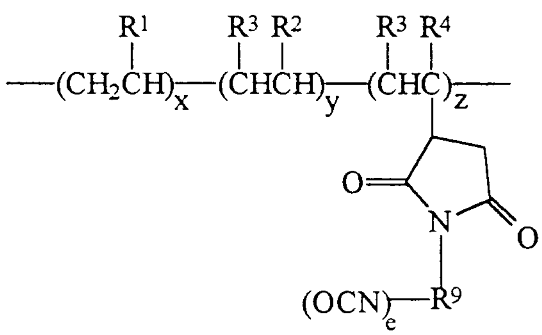

wherein

| | |
|---|---|
| $R^1$ | is an alkyl group having 4 to 12 carbon atoms; |
| $R^2$ | is selected from the group consisting of hydrogen, alkyl groups having 1 to 18 carbon atoms, and aryl groups having 6 to 12 carbon atoms; |
| $R^3$ | is selected from the group consisting of hydrogen and organic groups which, when linked with $R^2$ and the carbon atoms to which $R^2$ and $R^3$ are attached, form at least one ring group having 6 to 20 carbon atoms; |
| $R^4$ | is $R^1$ or $R^2$; |
| $R^9$ | is an organic group having a valence of e+1 and is selected from the group consisting of (1) linear and branched aliphatic groups having 2 to 12 carbon atoms, and (2) 5- and 6-membered aliphatic and aromatic carbocyclic groups having from 5 to 20 carbon atoms; |
| e | is 1 to 3; and |
| x, y, and z | define the molar amounts of the two-carbon units making up the backbone of the polyolefin, with the following provisos:<br>(1) x is at least 60 mole percent of the sum of x + y + z,<br>(2) y is zero where $R^1$ and $R^2$ are the same and $R^3$ is hydrogen,<br>(3) z is from 3 to 15 mole percent of the sum of x + y + z, and<br>(4) x, y, and z are selected in such a way so that the weight average molecular weight of the polyolefin is in the range of 15,000 to 250,000. |

**3.** The hot melt adhesive composition of claim 2 wherein $R^1$ is an alkyl group having 4 to 8 carbon atoms and, independently, $R^2$ is an alkyl group having 1 to 3 carbon atoms.

**4.** The hot-melt adhesive composition of any of claims 1 to 3, further comprising polyisocyanate-reacted hydroxyl-containing material, preferably selected from

a) the group consisting of monools and polyols, said monools and polyols optionally being aliphatic;

b) isocyanate-terminated urethanes, preferably having the formula

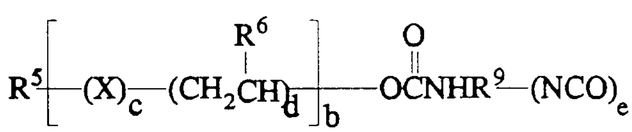

wherein

$R^9$ and e are defined above, and
$R^5$ is hydrogen or an aliphatic group having 1 to 12 carbon atoms;
$R^6$ is hydrogen or an alkyl group having 1 to 4 carbon atoms;
X is an element or a divalent radical;
b is a number that designates the average number of units in the hydroxyl-containing material such that the material has a number average molecular weight of 150 to 10,000;
c is 0 or 1; and
d is 1 or 2,

and

c) the group consisting of hydroxyl-substituted polyolefins, hydroxyl-substituted polyesters, and hydroxyl-substituted polyethers.

**5.** The hot-melt adhesive composition of any of claims 1 to 4 further comprising a tackifying resin, said resin preferably being selected from the class consisting of

a) the product of the polymerization of unsaturated $C_5$ to $C_9$ hydrocarbons,
b) a polyterpene, and
c) a rosin ester.

**6.** The hot-melt adhesive composition of any of claims 1 to 5 wherein said polyisocyanate-reacted maleated polyolefin is the reaction product of

a) 100 parts by weight of a maleated polyolefin having a weight average molecular weight of about 25,000 to 250,000 and an acid number from about 15 to 50 mg of KOH per gram of polyolefin;
b) up to 50 parts by weight of a hydroxyl-containing material having a number average molecular weight of about 150 to 10,000; and
c) at least one isocyanate, in an amount sufficient to provide to the mixture 0.5 to 4 equivalents of isocyanate per equivalent of total acid equivalents from (a) and hydroxyl equivalents, if any, from (b).

**7.** The hot-melt adhesive composition of claim 6 further comprising at least one of the following;

a) a catalyst that promotes the reaction of said at least one isocyanate with said maleated polyolefin and said hydroxyl-containing material, if present; and
b) up to 100 parts by weight of a tackifying resin per 100 parts by weight of maleated polyolefin.

**8.** A method of preparing a moisture curable hot-melt adhesive comprising the step:

copolymerizing a maleated polyolefin and at least one polyisocyanate, optionally in the presence of at least one of a catalyst and a tackifier, said maleated polyolefin preferably being the reaction product of

a) the polymerization product of one or more $C_6$ to $C_{14}$ $\alpha$-olefin monomers, optionally with up to 40 mole percent of one or more $C_2$ to $C_{20}$ $\alpha$-olefin monomers or aromatic olefins, said polymerization occurring in the presence of a Ziegler-Natta catalyst,
b) maleic anhydride, and
c) a free radical initiator, preferably a peroxide or an electron donor.

**9.** The method of claim 8 wherein at least one of the isocyanate units of said polyisocyanate has been reacted with a hydroxyl-containing material so as to form an isocyanate-terminated urethane, said isocyante-terminated urethane preferably having the formula

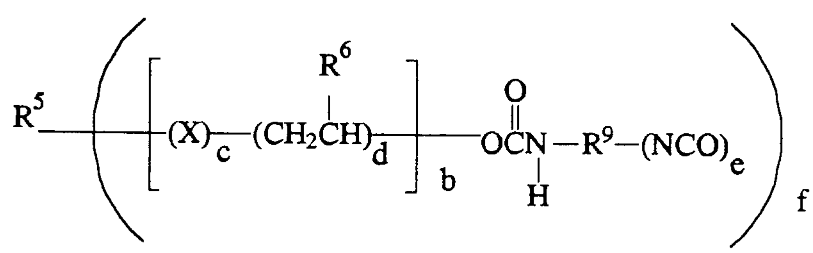

wherein

$R^5$, $R^6$, $R^9$, X, b, c, d, and e are defined in claim 4, and f is an integer from 1 to 4.

**10.** An article of manufacture comprising
a) at least one substrate, preferably independently a transportation vehicle or glazing material, and
b) a layer of the moisture-curable hot-melt adhesive composition of any of claims 1 to 7, with the provision that, where two or more substrates are present, said layer is between at least two of said substrates.